# EUROPEAN PATENT SPECIFICATION

(11) **EP 0 367 761 B1**
(45) Date of publication and mention of the grant of the patent: **29.12.1993**
(21) Application number: 88902068.1
(22) Date of filing: 22.02.1988
(51) Int. Cl.: H02J 9/06, H05B 41/04

(54) **BACKUP ELECTRICAL SYSTEM FOR LAMPS**
ELEKTRISCHES BACK-UPSYSTEM FÜR LAMPEN
SYSTEME ELECTRIQUE DE RESERVE POUR LAMPE

(43) Date of publication of application: 16.05.1990
(73) Proprietor: BAVCO MANUFACTURING COMPANY, Saugus, MA 01906 (US)
(72) Inventor: BAVARO, Joseph, P., Saugus, MA 01906 (US)
(74) Representative: Read, Matthew Charles
(86) International application number: US8800515
(87) International publication number: WO8907855

(56) References cited:
- GB-A- 2 072 439
- US-A- 3 659 179
- US-A- 3 684 891
- US-A- 4 057 750
- US-A- 4 349 863

## Description

This invention relates to a backup power system for a lamp, wherein the lamp during a normal operating condition is operated from AC mains power, and in an emergency condition when AC mains power is absent, is driven from a backup supply.

It is known from GB-A-2 072 439 to provide a back-up power system for a lighting fixture which operates a lamp during a normal operating condition in which AC mains power is present, including means for powering the lamp from an AC mains line, a low-voltage battery, a battery charging circuit for generating a battery charging current from AC mains power, and during an emergency operating condition in which AC mains power is absent, the back-up power system has means for operating the lamp including means for sensing the absence of AC mains power, means controlled by the sensing means for disconnecting the lamp from the powering means, a DC/AC inverter, means controlled by the sensing means for connecting the battery to the DC/AC inverter, and means for connecting the inverter to the lamp for operating the lamp.

It is an object of the present invention to provide an improved back-up power system capable of extending battery life and reducing the heat buildup which can damage the internal battery. To this end, the present invention is characterised in that means controlled by the sensing means is provided for disconnecting said DC/AC inverter from said lamp during the normal operating condition.

In this way, heat buildup which would damage the internal battery is reduced.

In order that the invention may be more fully understood an embodiment thereof will now be described by way of example with reference to the accompanying drawings, wherein:
Figure 1 is a schematic diagram of a backup power system for fluorescent lamps with an AC power supply and with a backup DC power source, embodying the invention; and
Figure 2 is a bottom plan view of the physical layout of the components of the backup power system for fluorescent lamps as shown in Figure 1.

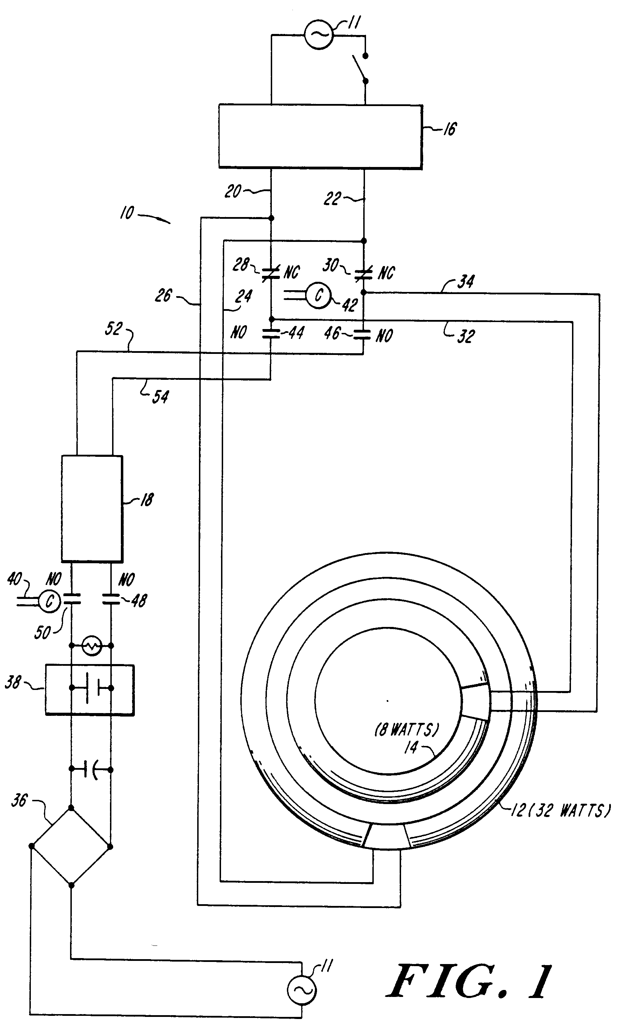

Referring in more detail to the drawings, the lighting fixture 10 includes a pair of circle fluorescent lamps in which the outer circle lamp 12 draws 32 watts and the inner circle lamp 14 draws 8 watts, as shown in Figure 1. A regular ballast 16 drives the two circle lamps, powered by 115 volts AC, while a DC/AC inverter 18 powers the inner circle lamp 14 in the event of interruption of the 115 volts AC, as indicated in Figure 1.

DC/AC inverter 18 is a conventional and well-known device which converts low-voltage DC power into AC power. It may illustratively consist of a one transistor or two transistor blocking or relaxation oscillator or other similar oscillating circuit. The oscillating circuit operates from a low voltage DC power source and drives a step-up transformer to increase the low voltage to a suitable higher voltage value to drive the fluorescent lamps. Advantageously, the oscillation frequency is relatively high (15-30 KHz) which high frequency allows the fluorescent lamps to operate efficiently, thereby reducing heat buildup.

More specifically, the circuitry is connected as follows. 115 volts AC from power supply 11 is applied to the regular ballast 16, which outputs a signal on conductors 20, 22, 24 and 26 to illuminate circle lamp 12, while outputting a signal across normally closed switches 28 and 30 and conductors 32 and 34 to illuminate inner circle lamp 14, as shown in Figure 1. At the same time 115 volts AC is applied across a trickle charger 36 to apply 12 volts DC to charge backup battery 38, as indicated by monitor light 13 shown in Figure 1. The charger 36 includes a transformer connected to a bridge diode, as indicated in Figure 1.

When the 115 volt AC power supply goes down, coil relays 40 and 42 depower, causing normally closed switches 28 and 30 to open and normally open switches 44, 46, 48 and 50 to close, whereupon the battery 38 delivers 12 volts DC to the DC/AC inverter 18 which outputs a high-freqneucy AC signal on conductors 52, 54, 32 and 34 to illuminate circle lamp 14, to provide a battery-powered backup lamp for several hours.

When the power supply is restored, the relay coils 40 and 42 are again energised, closing normally closed switches 28 and 30 and opening normally open switches 44, 46, 48 and 50 to power the two circle lamps 14 and 12 by the regular 115 volts AC power supply while disconnecting the DC/AC inverter 18 and reapplying a charging voltage to the batery 38 as before, as shown in Figure 1.

Similar push-to-test buttons can be connected across conductors 20 and 22 and across the conductors of the coils of relay switches 28, 30, 44, 46, 48 and 50 to simulate the discontinuance of the AC house current and connect the battery 38 to the DC/AC inverter 18 and the DC/AC inverter 18 in turn, to the standby circle lamp 14, to illuminate such lamp on a test basis.

Accordingly, when the power supply or house current is interrupted, the outer circle lamp goes out but the inner circle lamp continues to be illuminated by battery power providing emergency lighting for several hours.

The backup power system of the invention applies to one or more lamps which can be straight or circular, as desired. That is, one lamp can be employed in the circular embodiment shown in Figure 1, e.g. by removing circule lamp 12 therefrom and by employing the 8-watt circle lamp shown in Figure 1, or replacing it with a lamp, either circular or straight of different wattage, as desired.

Preferably, however, two or more lamps are employed in the backup power system embodying the invention.

The backup or standby lamp can be of any desired wattage. However, the lower the wattage, the longer it can be illuminated by a 12-volt battery. For example, a 32-watt lamp powered by such battery will give illumination for about one and one half hours, while an 8-watt lamp will give illumination for about four hours on such battery.

The backup power system of the invention can illuminate various types of lamps such as fluorescent lamps, mercury vapor lamps and high pressure sodium lamps. The only change required for such various circuits is in the rating of the components employed in the power systems of the invention, e.g. the ballast for a fluorescent lamp differs in rating from that of the mercury vapor and high pressure sodium lamps and can be replaced accordingly, but the respective circuits of the invention, e.g. as shown in Figure 1, apply per the invention.

Moreover, the backup power systems embodying the invention can be employed with an on-off timer or a manual switch as long as the respective relay coils and battery chargers are supplied with constant AC power when such timer or manual switch turns off the lamps, to prevent false triggering of the standby circuit and lamps.

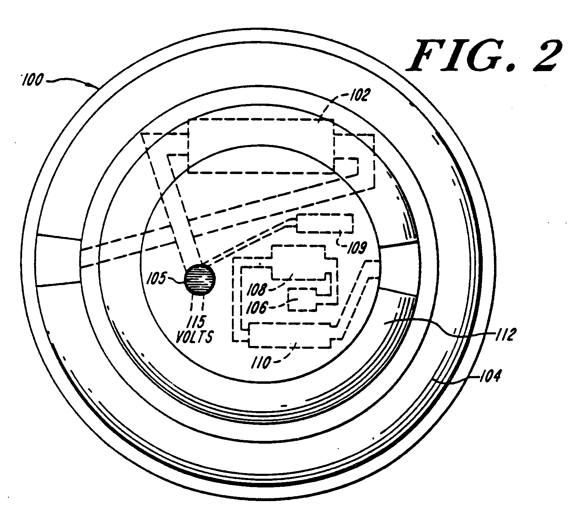

An example of the compact layout of the embodiment of the invention is shown in Figure 2. Thus, backup lamp system housing 100 supports a regular ballast 102, e.g. a 32 watt circular lamp 104 and a push-to-test, line AC voltage interrupter switch 105, as shown in Figure 1. In addition, the housing 100 supports a battery charger 106, a battery 108, an N/O relay switch 109, a DC/AC inverter 110 and, e.g. an 8-watt circular lamp 112.

Thus, compact units of the backup lamp systems of the invention can be readily mounted in various rooms of a building, including windowless rooms.

The described embodiment of the invention has the advantage that the battery which powers the emergency lighting is contained within the lighting fixture. Thus arrangement allows easy retrofitting of the fixture wihtout extensive rewiring. In addition the DC battery charging circuit is isolated from the AC line - a condition which is required to meet electrical code requirements in many locations.

## Claims

1. A back-up power system for a lighting fixture (10) which operates a lamp (14) during a normal operating condition in which AC mains power is present, including means (16) for powering the lamp (14) from an AC mains line (11), a low-voltage battery (38), a battery charging circuit (36) for generating a battery charging current from AC mains power (11), and during an emergency operating condition in which AC mains power is absent, the back-up power system has means for operating the lamp (14) including means (40, 42) for sensing the absence of AC mains power, means (28, 30) controlled by the sensing means (40, 42) for disconnecting the lamp (14) from the powering means (16), a DC/AC inverter (18), means (48, 50) controlled by the sensing means (40, 42) for connecting the battery (38) to the DC/AC inverter (18), and means (52, 54) for connecting the inverter (18) to the lamp (14) for operating the lamp, **characterised in that** means (44, 46) controlled by the sensing means (40, 42) is provided for disconnecting said DC/AC inverter (18) from said lamp (14) during the normal operating condition.

2. A back-up power system according to claim 1 wherein the sensing means (40, 42) includes a relay coil (42) and the disconnecting means (44, 46) comprises contacts (44, 46) controlled by the relay coil (42).

3. A back-up power system according to claim 1 or 2 wherein the low voltage battery (38) is located in the lighting fixture (10) so that the lighting fixture is self-contained.

4. A back-up power system according to claim 1, 2 or 3, wherein means is provided to disconnect the powering means (16) from the AC mains line (11) without disconnecting the charging means (36) from the AC mains line (11).

5. A back-up power system according to any of claims 1 to 4 wherein the low voltage battery is a 12 volt battery.

6. A back-up power system according to any of claims 1 to 5 including at least two lamps (12, 14) normally powered from said AC power and wherein during said emergency operating condition only one of the lamps is powered by the battery (38) and the DC/AC converter (18).

7. A back-up power system according to any one of claims 1 to 6 wherein the or each said lamp (12, 14) is a fluorescent lamp having a rounded tubular or straight tubular shape.

## Patentansprüche

1. Notstromversorgungssystem für einen Beleuchtungskörper (10), das eine Lampe (14) während eines normalen Betriebszustands, in dem eine Wechselstromnetzversorgung vorhanden ist, betreibt, und das eine Einrichtung (16) zum Versorgen der Lampe (14) mit Strom von einer Wechselstromnetzleitung (11), eine Niederspannungsbatterie (38), und einen Batterieladeschaltkreis (36) zum Erzeugen eines Batterieladestroms von der Wechselstromnetzversorgung (11) enthält, und wobei während einem Notbetriebszustand, in dem die Wechselstromnetzversorgung nicht vorhanden ist, das Notstromversorgungssystem eine Einrichtung zum Betreiben der Lampe (14) hat, die eine Einrichtung (40, 42) zum Erfassen der Abwesenheit der Wechselstromnetzversorgung, eine durch die Erfasssungseinrichtung (40, 42) gesteuerte Einrichtung (28, 30) zum Trennen der Lampe (14) von der Stromversorgungseinrichtung (16), einen Gleichstrom-/Wechselstrom-Wandler (18), eine durch die Erfassungseinrichtung (40, 42) gesteuerte Einrichtung (48, 50) zum Anschließen der Batterie (38) an den Gleichstrom-/Wechselstrom-Wandler (18), und eine Einrichtung (52, 54) zum Anschließen des Wandlers (18) an die Lampe (14) zum Betreiben der Lampe enthält, dadurch gekennzeichnet, daß eine durch die Erfassungseinrichtung (40, 42) gesteuerte Einrichtung (44, 46) vorgesehen ist, die den Gleichstrom-/Wechselstrom-Wandler (18) während dem normalen Betriebszustand von der Lampe (14) trennt.

2. Notstromversorgungssystem nach Anspruch 1, wobei die Erfassungseinrichtung (40, 42) eine Relaisspule (42) enthält und die Trennungseinrichtung (44, 46) Kontakte (44, 46) aufweist, die durch die Relaisspule (42) gesteuert werden.

3. Notstromversorgungssystem nach Anspruch 1 oder 2, wobei die Niederspannungsbatterie (38) in dem Beleuchtungskörper (10) angeordnet ist, so daß der Beleuchtungskörper geschlossen ist.

4. Notstromversorgungssystem nach Anspruch 1, 2 oder 3, wobei eine Einrichtung vorgesehen ist, um die Stromversorgungseinrichtung (16) von der Wechselstromnetzleitung (11) zu trennen, ohne die Ladeeinrichtung (36) von der Wechselstromnetzleitung (11) zu trennen.

5. Notstromversorgungssystem nach einem der Ansprüche 1 bis 4, wobei die Niederspannungsbatterie eine 12-Volt-Batterie ist.

6. Notstromversorgungssystem nach einem der Ansprüche 1 bis 5, das wenigstens zwei Lampen (12, 14) enthält, die normalerweise von der Wechselstromversorgung mit Strom versorgt werden, und wobei während dem Notbetriebszustand nur eine der Lampen durch die Batterie (38) und den Gleichstrom-/Wechselstrom-Wandler (18) mit Strom versorgt wird.

7. Notstromversorgungssystem nach einem der Ansprüche 1 bis 6, wobei die oder jede Lampe (12, 14) eine Leuchtstofflampe mit einer runden röhrenförmigen oder geraden röhrenförmigen Form ist.

## Revendications

1. Système d'alimentation de secours pour un appareil d'éclairage (10) qui commande une lampe (14) durant une condition de fonctionnement normale dans laquelle le courant alternatif du secteur est présent, comprenant des moyens (16) pour alimenter la lampe (14) à partir d'une ligne (11) à courant alternatif du secteur, une batterie (38) à basse tension, un circuit (36) de charge de la batterie pour générer un courant de charge de batterie à partir du courant alternatif (11) du secteur et, pendant une condition de fonctionnement d'urgence dans laquelle le courant alternatif du secteur est absent, le système d'alimentation de secours comporte des moyens pour commander la lampe (14), comprenant des moyens (40, 42) destinés à capter l'absence de courant alternatif du secteur, des moyens (28, 30) pilotés par les moyens capteurs (40, 42) pour déconnecter la lampe (14) des moyens d'alimentation (16), un inverseur courant continu/courant alternatif (18), des moyens (48, 50) pilotés par les moyens capteurs (40, 42) pour connecter la batterie (38) à l'inverseur courant continu/courant alternatif (18), et des moyens (52, 54) pour connecter l'inverseur (18) à la lampe (14) afin de commander la lampe, caractérisé en ce que des moyens (44, 46), pilotés par les moyens capteurs(40, 42), sont prévus pour déconnecter ledit inverseur courant continu/courant alternatif (18) de ladite lampe (14) durant la condition normale de fonctionnement.

2. Système d'alimentation de secours selon la revendication 1, dans lequel les moyens capteurs (40, 42) comprennent une bobine (42) de relais et les moyens de déconnexion (44, 46) comprennent des contacts (44, 46) commandés par la bobine (42) de relais.

3. Système d'alimentation de secours selon la revendication 1 ou 2, dans lequel la batterie (38) à basse tension est placée dans l'appareil (10) d'éclairage afin que l'appareil d'éclairage soit autonome.

4. Système d'alimentation de secours selon la revendication 1, 2 ou 3, dans lequel des moyens sont prévus pour déconnecter les moyens (16) d'alimentation de la ligne (11) à courant alternatif du secteur sans déconnecter les moyens de charge (36) de la ligne (11) à courant alternatif du secteur.

5. Système d'alimentation de secours selon l'une quelconque de revendications 1 à 4, dans lequel la batterie à basse tension est une batterie de 12 volts.

6. Système d'alimentation de secours selon l'une quelconque des revendications 1 à 5, comprenant au moins deux lampes (12, 14) normalement alimentées à partir dudit courant alternatif et dans lequel, pendant ladite condition de fonctionnement d'urgence, une seule des lampes est alimentée par la batterie (38) et le convertisseur courant continu/courant alternatif (18).

7. Système d'alimentation de secours selon l'une quelconque des revendications 1 à 6, dans lequel la ou chaque lampe (12, 14) est une lampe à fluorescence ayant une forme tubulaire arrondie ou tubulaire droite.
